# EUROPÄISCHE PATENTSCHRIFT

(11) **EP 2 798 167 B1**
(45) Veröffentlichungstag und Bekanntmachung des Hinweises auf die Patenterteilung: **07.06.2017**
(21) Anmeldenummer: 12813877.3
(22) Anmeldetag: 27.12.2012
(51) Int. Cl.: F01N 3/20, F01N 3/24

(54) **VORRICHTUNG ZUM EINBRINGEN EINES REDUKTIONSMITTELS**
DEVICE FOR INTRODUCING A REDUCTANT
DISPOSITIF PERMETTANT D'INTRODUIRE UN AGENT DE RÉDUCTION

(30) Priorität: 28.12.2011 DE 102011090035
(43) Veröffentlichungstag der Anmeldung: 05.11.2014
(73) Patentinhaber: Robert Bosch GmbH, 70442 Stuttgart (DE)
(72) Erfinder: KRUSE, Matthias, 70569 Stuttgart-Vaihingen (DE); BURGER, Matthias, 71711 Murr (DE); BUERGLIN, Markus, 72154 Ditzingen (DE); BRAUN, Martin, 71563 Affalterbach (DE); TROMPETER, Franz-Josef, 71691 Freiberg am Neckar (DE)
(86) Internationale Anmeldenummer: PCT/EP2012/076925
(87) Internationale Veröffentlichungsnummer: WO 2013/098306

(56) Entgegenhaltungen:
- EP-A1- 2 014 885
- DE-A1-102007 020 965
- DE-A1-102009 005 528
- DE-A1-102009 029 473
- DE-A1-102009 038 546

## Beschreibung

Die Erfindung betrifft eine Vorrichtung zum Einbringen eines Reduktionsmittels in eine Abgasanlage einer Brennkraftmaschine nach dem Oberbegriff des Anspruchs 1.

### Stand der Technik

Die DE 103 24 482 A1 beschreibt eine Vorrichtung zum Einspritzen eines flüssigen Reduktionsmittels in das Abgas einer Brennkraftmaschine. Hierzu wird das Reduktionsmittel aus einem Vorratsbehälter zu einer im Bereich der Abgasanlage angeordneten Injektionseinrichtung gepumpt. Eine Halteeinrichtung der Injektionseinrichtung wird vom Reduktionsmittel durchströmt und hierdurch gekühlt. Ähnlich arbeitet auch die in der DE 10 2007 003 120 A1 gezeigte Vorrichtung. Bekannt ist auch eine Wasserkühlung der Vorrichtung. Weitere Patentdokumente aus dem betreffenden Gebiet sind die WO 2010/054710 A1, die WO 2009/112129 A1, die DE 10 2010 009 605 A1 und die DE 10 2010 007 564 A1.

Die DE 10 2009 029 473 offenbart ein Dosiermodul mit einem Druckluftkanal und einem Leitrohr aus Teflon.

### Offenbarung der Erfindung

Das der Erfindung zugrundeliegende Problem wird durch eine Vorrichtung mit den Merkmalen des Anspruchs 1 gelöst. Vorteilhafte Weiterbildungen der Erfindung sind in Unteransprüchen angegeben.

Für die Erfindung wichtige Merkmale finden sich ferner in der nachfolgenden Beschreibung und in der Zeichnung, wobei die Merkmale sowohl in Alleinstellung als auch in unterschiedlichen Kombinationen für die Erfindung wichtig sein können, ohne dass hierauf nochmals darauf hingewiesen wird.

Ein Vorteil der erfindungsgemäßen Vorrichtung ist es, das auf ein sonst vorhandenes Wärmeschutzblech verzichtet werden kann. Stattdessen wird die Vorrichtung durch die zugeführte Luft gekühlt. Wenn die Luft außen am Einspritzventil oder an Teilen des Einspritzventils und an anderen Teilen der Vorrichtung entlang strömt, hat sie ferner in thermischer Hinsicht die Wirkung eines Wärmeschutzbleches. Bisher bestehende Auslegungen von entsprechenden Vorrichtungen zum Einbringen des Reduktionsmittels, beispielsweise das Einspritzventil betreffend, können dabei weitgehend erhalten bleiben (wenn hier und nachfolgend der Begriff "Reduktionsmittel" verwendet wird, wird hierunter nicht nur das Endprodukt, sondern auch ein Vorprodukt, beispielsweise eine Harnstoff-Wasserlösung verstanden, das sich erst im Abgaskanal zum Reduktionsmittel umwandelt). Die erfindungsgemäße Vorrichtung schafft einen luftunterstützten Zerstäuber mit sehr gutem Zerstäubungspotential und ermöglicht es so, eine sehr kostengünstige modulare Erweiterung bestehender Produktkonzepte zu realisieren. Wird außerdem auf die bisher übliche Kühlung der Vorrichtung durch Kühlwasser oder durch Reduktionsmittel verzichtet, ist ein völlig neues Design der Vorrichtung sinnvoll und möglich. Eingesetzt werden können dabei ganz unterschiedliche luftgestützte Zerstäubermechanismen, beispielsweise effervescente, außenmischende und innenmischende Zerstäubermechanismen.

Durch die erfindungsgemäß vorgesehene Zerstäubung des Reduktionsmittels mittels Sekundärluft wird auf einen hocheffizienten Zerstäubermechanismus zurückgegriffen. Mit einem geringen Luftvolumenstrom von beispielsweise unter 10 nl/min können leicht bereits mittlere Tröpfchengrößen von unter 30, ja sogar von unter 20 Mikrometern erreicht werden. Bei dieser Zerstäubungsleistung wird eine Wandfilmbildung des Reduktionsmittels oder eines Vorprodukts in der Abgasanlage, beispielsweise an der Innenwand des Abgasrohres bzw. Abgaskanals bei einem geeigneten Einbau verhindert. Hierdurch wird insbesondere bei mittleren und niedrigen Lastprofilen der Brennkraftmaschine und daher niedriger Abgastemperatur (beispielsweise Stadtfahrten bei Bussen) sowie bei hoher NOX-Rohemission die Bildung von Ablagerungen z.B. aus Harnstoffkristallen an der Wand des Abgasrohrs vermieden. Auch wird verhindert, dass durch solche Ablagerungen die Ausbreitung des Reduktionsmittelsprays behindert wird, was zu einem verminderten NOX-Umsatz führen würde. Auch weitere damit zusammenhängende Systemfehlfunktionen werden verhindert. Schließlich wird ein durch den verringerten Strömungsquerschnitt bei anhaftenden Ablagerungen erhöhter Abgasgegendruck verhindert.

Hierbei ist am Auslass des Einspritzventils eine Hülse angeordnet, die aus einem hydrophoben Material hergestellt oder mit einem hydrophoben Material beschichtet ist. Übliche Reduktionsmittel oder deren Vorprodukte, beispielsweise Harnstoff, weisen nämlich eine erhebliche Kriechneigung auf, die dazu führen kann, dass das von dem Einspritzventil zur Mischung mit Luft in der Mischkammer abgegebene Reduktionsmittel wieder "zurückkriecht" und den Auslass des Einspritzventils strömungsmäßig verändert, schlimmstenfalls vielleicht sogar verstopft. Dies wird durch die Hülse verhindert. Dabei wird die Mischleistung der Mischkammer dadurch verbessert, daß das vom Auslass des Einspritzventils abgewandte Ende der Hülse düsenartig verjüngt ist und an die Mischkammer angrenzt.

Besonders vorteilhaft ist die erfindungsgemäße Vorrichtung, wenn sie einen Distanzabschnitt aufweist, welcher fluidisch zwischen Abgabedüse und Mischkammer angeordnet ist. Hierdurch kann die Abgabeposition des Reduktionsmittels vom Rand des Abgasrohrs weg und noch mehr in dessen Mitte verlagert werden, wodurch die Ablagerung des Reduktionsmittels an der Wand des Abgasrohrs nochmals besser verhindert wird. Auch ist es hierdurch möglich, die Stelle, an der das Reduktionsmittel in das Abgasrohr abgegeben wird, so zu positionieren, dass sie nicht in einem Rückströmgebiet der Abgasströmung liegt, was ebenfalls eine Verringerung des Risikos von Ablagerungen an der Wand des Abgasrohres bewirkt.

Vorgeschlagen wird ferner bei einer Weiterbildung der Erfindung, dass die Abgabedüse einen Drallerzeugungsabschnitt aufweist. Dieser Drallerzeugungsabschnitt kann beispielsweise einen Kern im Kanalabschnitt der Abgabedüse bilden, so dass das Luft-Reduktionsmittelgemisch durch den Ringraum zwischen dem Kern und dem Kanalabschnitt hindurchströmt. Durch eine geeignete Formgebung des Drallerzeugungsabschnitts, beispielsweise durch eine schraubenförmig gerillte Außenfläche, kann der hindurchströmenden Ringströmung ein entsprechender Drall aufgezwungen werden, der zu einer nochmals besseren Zerstäubung des aus der Abgabedüse austretenden Reduktionsmittelsprays führt. Es versteht sich, dass hierzu gleichbedeutend auch ist, den innen liegenden Kern gerade und an der Innenwand des außen liegenden Kanalabschnitts entsprechende Maßnahmen vorzusehen, durch die der hindurchströmenden Ringströmung ein Drall aufgezwungen wird.

Möglich ist auch, dass die erfindungsgemäße Vorrichtung eine Abschirmhülse umfasst, die koaxial zur Mischkammer und zur Düse und, wenn vorhanden, auch zum Distanzabschnitt derart angeordnet ist, dass zwischen ihr und diesen Elementen ein Ringraum vorhanden ist. Eine solche Abschirmhülse hat also die Funktion einer thermischen Abschirmung, so dass noch besser beispielsweise auf zusätzliche Kühlmaßnahmen durch Wasser oder Reduktionsmittel verzichtet werden kann, und dass der Abgabeort des Reduktionsmittels noch weiter in die Mitte des Abgasstrahls im Abgasrohr hinein verlagert werden kann, ohne dass die Vorrichtung thermisch unzulässig belastet wird.

Zur nochmaligen Verbesserung der thermischen Situation der Vorrichtung kann der Luftstrom zunächst durch eine Kühleinrichtung geführt werden.

Nachfolgend werden Ausführungsformen der Erfindung unter Bezugnahme auf die beiliegende Zeichnung erläutert. In dieser zeigen:
- Figur 1: eine schematische Darstellung einer Brennkraftmaschine mit einer Vorrichtung zum Einbringen eines Reduktionsmittels in eine Abgasanlage der Brennkraftmaschine;
- Figur 2: eine geschnittene perspektivische Darstellung einer Vorrichtung zum Einbringen des Reduktionsmittels; und
- Figur 3: einen Längsschnitt durch eine weitere Vorrichtung zum Einbringen des Reduktionsmittels.

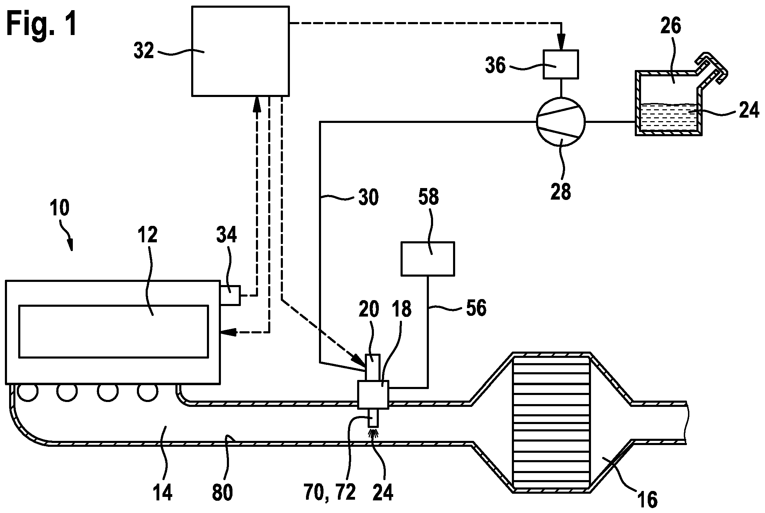

Eine Brennkraftmaschine trägt in Figur 1 insgesamt das Bezugszeichen 10. Sie umfasst Brennräume 12, in denen ein Kraftstoff/Luftgemisch verbrannt wird.

Heiße Verbrennungsabgase werden aus den Brennräumen 12 durch einen Abgaskanal 14 abgeführt. In diesem ist ein Abgasnachbehandlungssystem in Form eines SCR-Katalysators 16 angeordnet. SCR bedeutet "selective catalytic reduction". In dem SCR-Katalysator 16 wird der Schadstoff NOX unter Zuhilfenahme von flüssigem Reduktionsmittel zu N₂ und H₂O reduziert. Dem SCR-Katalysator 16 ist üblicherweise ein Oxidationskatalysator vorgeschaltet, der aus Gründen der Übersichtlichkeit in Figur 1 jedoch nicht dargestellt ist.

Als Reduktionsmittel kann Ammoniak verwendet werden. Dabei wird das Ammoniak aus Gründen der Handhabbarkeit nicht in reiner Form, sondern in Form eines Vorproduktes zum Abgas dosiert. Als Vorprodukt kommt insbesondere eine Harnstoff-Wasserlösung in Frage.

Zu der Brennkraftmaschine 10 beziehungsweise deren Abgassystem gehört auch eine Vorrichtung 18, mit der das Reduktionsmittel in das im Abgaskanal 14 strömende Abgas eingebracht werden kann. Die hier beschriebene Vorrichtung 18 beschränkt sich jedoch nicht auf die Zuführung einer Harnstoff-Wasserlösung, sondern kann allgemein auch in Verbindung mit anderen Reduktionsmitteln verwendet werden.

Die Vorrichtung 18 umfasst ein Einspritzventil 20, beispielsweise einen Injektor, der von einer Halteeinrichtung 22 direkt am Abgaskanal 14 gehalten ist. Durch das Einspritzventil 20 gelangt letztlich das Reduktionsmittel, welches in den Figuren insgesamt mit 24 bezeichnet ist, in den Abgaskanal 14. Das Reduktionsmittel 24 wird in einem Vorratsbehälter 26 bevorratet. Aus diesem wird es über eine Pumpe 28 über eine Leitung 30 zum Einspritzventil 20 gefördert.

Der Betrieb der Brennkraftmaschine 10 und auch der Vorrichtung 18 zum Ausbringen des Reduktionsmittels 24 in das Abgas der Brennkraftmaschine 10 wird von einer Steuer- und Regeleinrichtung 32 gesteuert und geregelt. Hierzu erhält die Steuer- und Regeleinrichtung 32 Signale von verschiedenen Sensoren, von denen in Figur 1 nur einer beispielhaft mit dem Bezugszeichen 34 dargestellt ist. Beeinflusst wird von der Steuer- und Regeleinrichtung 32 unter anderem die Leistung eines Antriebsmotors 36, der die Pumpe 28 antreibt, das Einspritzventil 20, bei dem es sich beispielsweise um ein elektromagnetisch betätigtes Einspritzventil handeln kann, und verschiedene Stelleinrichtungen der Brennkraftmaschine 10, beispielsweise Injektoren (nicht dargestellt), mit denen der Kraftstoff direkt in die Brennräume 12 eingespritzt wird.

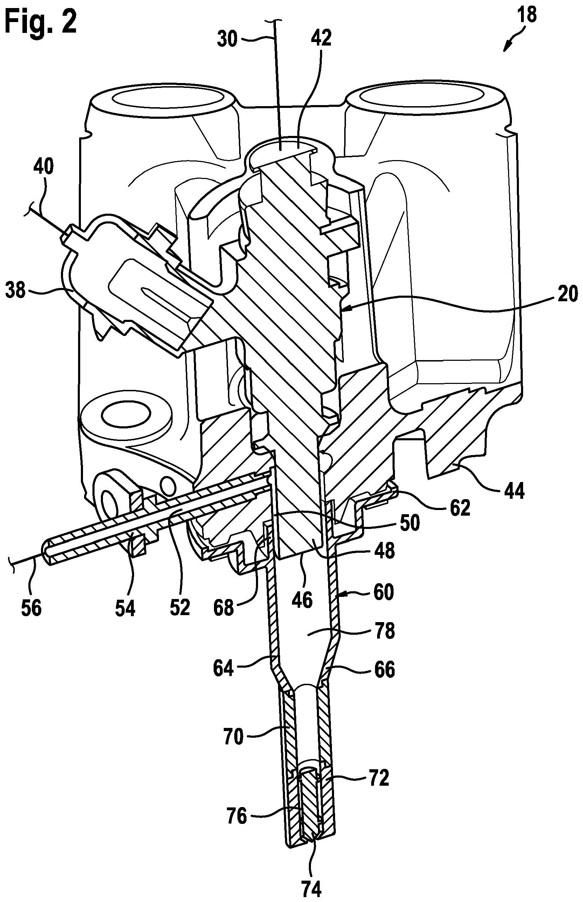

In Figur 2 ist eine Vorrichtung 18 stärker im Detail dargestellt: Das Einspritzventil 20 umfasst einen Anschluss 38, an den eine Steuerleitung 40 angeschlossen ist, die wiederum mit der Steuer- und Regeleinrichtung 32 verbunden ist. Die Vorrichtung 18 umfasst ferner einen Anschluss 42, der mit der Leitung 30 für das Reduktionsmittel 24 verbunden ist. Das Einspritzventil 20 ist in ein Gehäuse 44 der Vorrichtung 18 eingesetzt und ragt in Figur 2 im unteren Bereich des Gehäuses 44 mit einem Auslass 46 über dieses hinaus. Der Auslass 46 ist am in Figur 2 unteren Ende eines düsenartigen Auslassabschnitts 48 des Einspritzventils 20 angeordnet. Radial außerhalb von dem Auslassabschnitt 48 ist zwischen diesem und dem ihn umgebenden Gehäuse 44 ein ringförmiger Spalt 50 vorhanden. In diesen Spalt 50 mündet in dessen in Figur 2 oberen Bereich ein Luftzuführkanal 52, der zu einer Längsachse (nicht dargestellt) des Einspritzventils 20 in etwa orthogonal verläuft. Der Luftzuführkanal 52 verfügt über einen Luft-Anschluss 54, der mit einer Druckluftleitung 56 verbunden ist. Diese wird von einer Druckluftversorgung 58 gespeist (Figur 1).

An den in Figur 2 unteren Bereich des Gehäuses 44 ist ein rohrstutzenartiges Teil 60 über einen Flanschabschnitt 62 angeflanscht. An den Flanschabschnitt 62 ist ein rohrartiger und zum Einspritzventil 20 koaxialer Abschnitt 64 angeformt, der sich an seinem vom Gehäuse 44 und vom Einspritzventil 20 abgewandten Ende 66 konisch verjüngt. Das in Figur 2 obere Ende 68 des rohrartigen Abschnitts 64 umgibt das untere Ende des Auslassabschnittes 48 des Einspritzventils 20, wobei es jedoch ebenfalls einen radialen und ringförmigen Spalt zwischen Auslassabschnitt 48 und Ende 68 bildet, der ebenfalls mit 50 bezeichnet ist.

Am unteren Ende 66 des rohrstutzenartigen Teils 60 ist ein Distanzabschnitt 70 in Form eines geraden Rohres befestigt, an dessen in Figur 2 wiederum unteres Ende eine Abgabedüse 72 befestigt ist. In diese ist bei der hier gezeigten speziellen Ausführungsform in der Art eines Kerns ein Drallerzeugungsabschnitt 74 eingesetzt, und zwar derart, dass zwischen der äußeren Mantelfläche des Drallerzeugungsabschnitts 74 und einer Innenwand (ohne Bezugszeichen) der Abgabedüse 72 ein ringförmiger Strömungskanal 76 gebildet wird. Die äußere Mantelfläche des Drallerzeugungsabschnitts 74 ist mit spiraligen Riefen oder Rillen versehen, die in Figur 2 aber nicht gezeigt sind.

Die gesamte Anlage arbeitet folgendermaßen: Im Betrieb der Brennkraftmaschine 10 wird von der Pumpe 28 Reduktionsmittel 24 über die Leitung 30 zum Einspritzventil 20 gepumpt. Ebenso wird Druckluft von der Druckluftversorgung 58 über die Druckluftleitung 56 und den Luft-Anschluss 54 in den Luftzuführkanal 52 gepumpt. Von dort gelangt die Druckluft in den ringraumförmigen Spalt 50 und vermischt sich innerhalb des rohrartigen Abschnitts 64 mit dem aus dem Auslass 46 des Einspritzventils 20 austretenden Reduktionsmittelspray 24. Der Innenraum des rohrartigen Abschnitts 64 bildet insoweit eine Mischkammer 78.

Die über den Spalt 50 eingeführte Luft wird auch als "Sekundärluft" bezeichnet. Sie unterstützt sehr wirkungsvoll die am Auslass 46 des Einspritzventils 20 stattfindende Zerstäubung des Reduktionsmittels 24. So können, dies sind jedoch rein beispielhafte Werte, bereits mit einem geringen Luftvolumenstrom von unter 10 nl/min bereits mittlere Tröpfchengrößen von unter 20 Mikrometern erreicht werden. Von der Mischkammer 78 gelangt die Luft mit dem zerstäubten Reduktionsmittel 24 über den Distanzabschnitt 70 in die Abgabedüse 72, wo der Strömung durch den Drallerzeugungsabschnitt 74 ein Drall aufgezwungen wird. Der vorliegend drallbehaftete Reduktionsmittelspray tritt am in Figur 2 unteren Ende der Abgabedüse 72 aus.

Wie insbesondere auch aus Figur 1 ersichtlich ist, kann durch die Mischkammer 78, den Distanzabschnitt 70 und die Abgabedüse 72 der Ort, an dem der Reduktionsmittelspray in den Abgaskanal 14 eingebracht wird, in die radiale Mitte des Abgaskanals 14, also von der Begrenzungswand 80 des Abgaskanals 14 weg verlagert werden. Sowohl durch die bessere Zerstäubung des Reduktionsmittels 24 in der Mischkammer 78 als auch durch diese Verlagerung der Abgabeposition des Reduktionsmittels 24 von der Wand 80 weg wird ein Ablagern des Reduktionsmittels 24 an der Wand 80 verhindert. Dabei kann aufgrund der speziellen Auslegung der Vorrichtung 14 dennoch auf eine besondere Kühlung verzichtet werden.

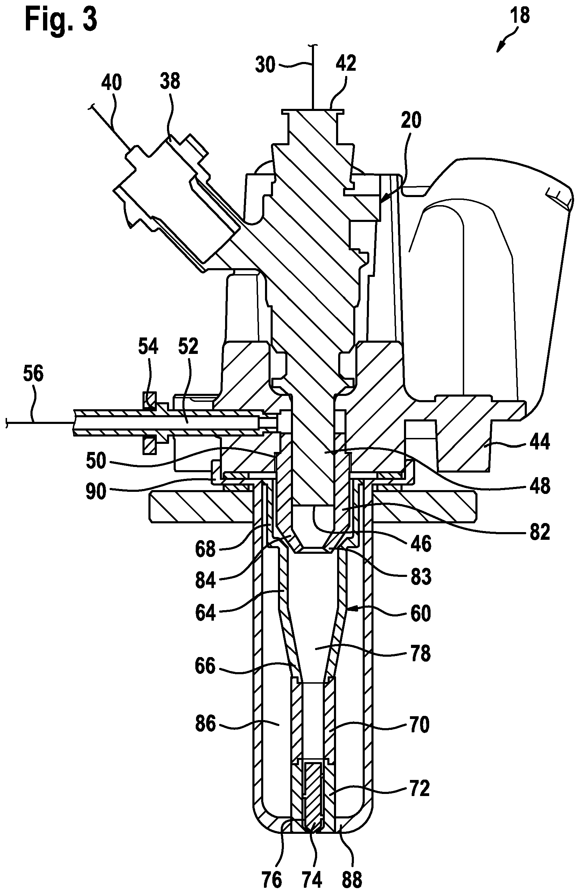

Eine abgewandelte Vorrichtung 18 ist in Figur 3 dargestellt. Dabei gilt, dass solche Elemente und Bereiche, welche äquivalente Funktionen zu Elementen und Bereichen der bereits in Figur 2 erläuterten Vorrichtung 18 aufweisen, die gleichen Bezugszeichen tragen und nicht nochmals im Detail erläutert sind.

Die in Figur 3 dargestellte Vorrichtung unterscheidet sich von jener in Figur 2 vor allem in zwei Punkten: Zum einen ist auf den Auslassabschnitt 48 des Einspritzventils 20 eine Hülse 82 aufgesetzt, die aus einem hydrophoben Material hergestellt ist. Alternativ könnte die Hülse 82 auch aus einem normalen Metall oder einer Keramik hergestellt sein, welches jedoch mit einem hydrophoben Material beschichtet ist. Das vom Auslass 46 abgewandte Ende 83 der Hülse 82 ist düsenartig verjüngt und grenzt an die Mischkammer 78 an.

Zum anderen verfügt die in Figur 3 gezeigte Vorrichtung 18 über eine thermische Abschirmhülse 84, die koaxial zur Mischkammer 78, radial außerhalb zum rohrstutzenartigen Teil 60, sowie auch koaxial zum Distanzabschnitt 70 und zur Abgabedüse 72 angeordnet ist, derart, dass zwischen der Abschirmhülse 84 und den oben genannten Teilen ein Ringraum 86 vorhanden ist. Die Abschirmhülse 84 weist an ihrem in Figur 3 unteren Ende einen Boden 88 auf, in dem eine Öffnung (ohne Bezugszeichen) vorhanden ist, durch die die Abgabedüse 72 hindurchtreten kann. Das in Figur 3 obere Ende der Abschirmhülse 84 verfügt über einen Flanschabschnitt 90, mit dem sie am Gehäuse 44 befestigt ist.

Durch die Hülse 82 wird verhindert, dass Reduktionsmittel 24 in Richtung des Spalts 50 oder des Luftzuführkanals 52 zurückkriecht und hierdurch die Abgabe und Spraybildung des Reduktionsmittels 24 behindert. Durch die Abschirmhülse 84 wird die thermische Belastung der Elemente 60, 70 und 72 und hierdurch mittelbar auch des Einspritzventils 20 vermindert.

Bei einer nicht dargestellten Ausführungsform kann ferner eine Kühleinrichtung vorgesehen sein, durch welche die dem Luft-Einschluss 54 zugeführte Luft gekühlt wird. Auch wäre es möglich, zusätzlich das Gehäuse 44 beispielsweise mit Kühlwasser zu kühlen. Dies dient ebenso zur Reduktion der thermischen Belastung der Vorrichtung 18 wie eine ebenfalls mögliche, aber nicht dargestellte
Ausführung des rohrartigen Abschnitts 64 mit einer Doppelwand. Außerdem können ganz verschiedene luftgestützte Zerstäubermechanismen (effervescent, außen-mischend, innen-mischend) zum Einsatz kommen.

## Patentansprüche

1. Vorrichtung (18) zum Einbringen eines Reduktionsmittels (24) in eine Abgasanlage einer Brennkraftmaschine (10), mit einem Reduktionsmittelanschluss (42) und einem Einspritzventil (20) für das Reduktionsmittel (24), wobei sie einen Luft-Anschluss (54), eine Mischkammer (78), die sowohl mit einem Auslass (46) des Einspritzventils (20) als auch dem Luft-Anschluss (54) fluidverbunden ist, und eine Abgabedüse (72) aufweist, die mit der Mischkammer (78) zur Abgabe des Reduktionsmittel-Luftgemisches fluidverbunden ist, wobei am Auslass (46) des Einspritzventils (20) eine Hülse (82) angeordnet ist, die aus einem hydrophoben Material hergestellt oder mit einem hydrophoben Material beschichtet ist, **dadurch gekennzeichnet, dass** das vom Auslass (46) des Einspritzventils (20) abgewandte Ende (83) der Hülse (82) düsenartig verjüngt ist und an die Mischkammer (78) angrenzt.

2. Vorrichtung (18) nach Anspruch 1, **dadurch gekennzeichnet, dass** sie einen Distanzabschnitt (70) aufweist, welcher fluidisch zwischen Abgabedüse (72) und Mischkammer (78) angeordnet ist.

3. Vorrichtung (18) nach einem der vorhergehenden Ansprüche, **dadurch gekennzeichnet, dass** die Abgabedüse (72) einen Drallerzeugungsabschnitt (74) aufweist.

4. Vorrichtung (18) nach einem der vorhergehenden Ansprüche, **dadurch gekennzeichnet, dass** sie eine Abschirmhülse (84) umfasst, die koaxial zur Mischkammer (78) und zur Düse (72) und, wenn vorhanden, auch zum Distanzabschnitt (70) derart angeordnet ist, dass zwischen ihr und diesen Elementen ein Ringraum (86) vorhanden ist.

5. Vorrichtung nach wenigstens einem der vorhergehenden Ansprüche, **dadurch gekennzeichnet, dass** der Luftstrom durch eine Kühleinrichtung geführt wird.

## Claims

1. Device (18) for introducing a reducing agent (24) into an exhaust system of an internal combustion engine (10), having a reducing agent port (42) and having an injection valve (20) for the reducing agent (24), wherein said device has an air port (54), a mixing chamber (78), which is fluidically connected both to an outlet (46) of the injection valve (20) and to the air port (54), and a discharge nozzle (72), which is fluidically connected to the mixing chamber (78) for the purposes of discharging the reducing agent-air mixture, wherein, at the outlet (46) of the injection valve (20), there is arranged a sleeve (82) which is produced from a hydrophobic material or coated with a hydrophobic material, **characterized in that** that end (83) of the sleeve (82) which is averted from the outlet (46) of the injection valve (20) is tapered in the manner of a nozzle and adjoins the mixing chamber (78).

2. Device (18) according to Claim 1, **characterized in that** said device has a spacer section (70) which is arranged fluidically between discharge nozzle (72) and mixing chamber (78).

3. Device (18) according to one of the preceding claims, **characterized in that** the discharge nozzle (72) has a swirl-generating section (74).

4. Device (18) according to one of the preceding claims, **characterized in that** said device comprises a shielding sleeve (84) which is arranged coaxially with respect to the mixing chamber (78) and with respect to the nozzle (72), and also with respect to the spacer section (70) if the latter is provided, in such a way that a ring-shaped chamber (86) is present between said shielding sleeve and said elements.

5. Device according to at least one of the preceding claims, **characterized in that** the air flow is conducted through a cooling device.

## Revendications

1. Dispositif (18) pour introduire un agent réducteur (24) dans une installation de gaz d'échappement d'un moteur à combustion interne (10), comprenant un raccord d'agent réducteur (42) et une soupape d'injection (20) pour l'agent réducteur (24), le dispositif présentant un raccord d'air (54), une chambre de mélange (78) qui est connectée fluidiquement à la fois à une sortie (46) de la soupape d'injection (20) et au raccord d'air (54), et une buse de distribution (72) qui est connectée fluidiquement à la chambre de mélange (78) pour distribuer le mélange d'agent réducteur et d'air, une douille (82) étant disposée au niveau de la sortie (46) de la soupape d'injection (20), laquelle est fabriquée à partir d'un matériau hydrophobe ou est revêtue d'un matériau hydrophobe, **caractérisé en ce que** l'extrémité (83) de la douille (82) opposée à la sortie (46) de la soupape d'injection (20) se rétrécit en forme de buse et est adjacente à la chambre de mélange (78).

2. Dispositif (18) selon la revendication 1, **caractérisé en ce qu'**il présente une portion d'espacement (70) qui est disposée fluidiquement entre la buse de distribution (72) et la chambre de mélange (78).

3. Dispositif (18) selon l'une quelconque des revendications précédentes, **caractérisé en ce que** la buse de distribution (72) présente une portion de génération de tourbillon (74).

4. Dispositif (18) selon l'une quelconque des revendications précédentes, **caractérisé en ce qu'**il comprend une douille de protection (84) qui est disposée coaxialement par rapport à la chambre de mélange (78) et par rapport à la buse (72), et, lorsqu'elle est présente, également coaxialement par rapport à la portion d'espacement (70), de telle sorte qu'entre elle et ces éléments soit réalisé un espace annulaire (86).

5. Dispositif selon au moins l'une quelconque des revendications précédentes, **caractérisé en ce que** le flux d'air est guidé à travers un dispositif de refroidissement.
